# EUROPÄISCHE PATENTANMELDUNG

(11) **EP 4 212 720 A1**
(43) Veröffentlichungstag der Anmeldung: **19.07.2023**
(21) Anmeldenummer: 23151574.3
(22) Anmeldetag: 13.01.2023
(51) Int. Cl.: F03D 9/12, F03D 13/20, F03D 80/00, F03D 13/10

(54) **TURM FÜR EINE WINDENERGIEANLAGE UND BETREFFENDE WINDENERGIEANLAGE**

(30) Priorität: 13.01.2022 DE 102022100725
(71) Anmelder: Bettels Betonfertigteile GmbH, 26723 Emden (DE)
(72) Erfinder: STRACKE, Olaf, 26725 Emden (DE); BÖTTGER, Michael, 58455 Witten (DE)
(74) Vertreter: Eisenführ Speiser

(57) **Zusammenfassung**

Die Erfindung betrifft einen Turm (4) für eine Windenergieanlage (2) mit einer Mehrzahl von übereinander angeordneten Wandelementen (6), wobei zumindest einige, insbesondere sämtliche der Wandelemente (6) Beton aufweisen oder daraus ausgebildet sind, wobei der Turm (4) einen unteren Abschnitt (8) aufweist, welcher sich ausgehend von einem unteren Abschlussabschnitt (10) bis zu einer Bezugshöhe (12) erstreckt, und einen oberen Abschnitt (14), welcher sich ausgehend von der Bezugshöhe (12) bis zu einem oberen Abschlussabschnitt (16) erstreckt, wobei die Bezugshöhe (12) einer Höhe von 40 % bis 60 % einer Gesamthöhe des Turms ausgehend von dem unteren Abschlussabschnitt entspricht, insbesondere einer Blattspitzendurchgangshöhe (12) eines Rotorblatts der Windenergieanlage (2).

Erfindungsgemäß wird vorgeschlagen, dass eine Biegesteifigkeit (Su) des Turms (4) in dem unteren Abschnitt (8) größer ist als eine Biegesteifigkeit (So) des Turms (4) in dem oberen Abschnitt (14), wobei die Biegesteifigkeit (So) in dem oberen Abschnitt (14) über einen Höhenverlauf (H) ausgehend von dem oberen Abschlussabschnitt (10) bis zur Bezugshöhe (12) um weniger als 10%, insbesondere weniger als 5 %, abnimmt und wobei die Biegesteifigkeit (So) in dem unteren Abschnitt (14) über einen Höhenverlauf (H) ausgehend von der Bezugshöhe (12) bis zum unteren Abschlussabschnitt (10) um weniger als 20%, insbesondere weniger als 15 %, abnimmt.

## Beschreibung

Die Erfindung betrifft einen Turm für eine Windenergieanlage mit einer Mehrzahl von übereinander angeordneten Wandelementen, wobei zumindest einige, insbesondere sämtliche der Wandelemente Beton aufweisen oder daraus ausgebildet sind, wobei der Turm einen unteren Abschnitt aufweist, welcher sich ausgehend von einem unteren Abschlussabschnitt bis zu einer Bezugshöhe erstreckt, und einen oberen Abschnitt, welcher sich ausgehend von der Bezugshöhe bis zu einem oberen Abschlussabschnitt erstreckt, wobei die Bezugshöhe einer Höhe von 35 % bis 65 % einer Gesamthöhe des Turms ausgehend von dem unteren Abschlussabschnitt entspricht, insbesondere einer Blattspitzendurchgangshöhe eines Rotorblatts der Windenergieanlage.

Derartige Türme für Windenergieanlagen, welche eine Mehrzahl von übereinander angeordneten Wandelementen aufweisen, sind aus dem Stand der Technik bekannt. Türme für Windenergieanlagen werden typischerweise so ausgelegt, dass die Eigenfrequenz der Türme von den im Betrieb auftretenden Erregerfrequenzen, die sich insbesondere aus einer Rotation der Rotorblätter ergeben, abweichen. Andernfalls kann sich ein unerwünschtes Schwingungsverhalten an dem Turm einstellen, welches im ungünstigen Fall zu einer sogenannten Resonanzkatastrophe führen und den Turm beschädigen oder zerstören könnte.

In Abhängigkeit von der Eigenfrequenz des Turms werden hierbei unterschiedliche Auslegungskonzepte verfolgt. Bei Betontürmen hat sich eine sogenannte soft-stiff-Auslegung bewährt. Im Rahmen dieser Auslegung wird angestrebt, dass der Turm eine Eigenfrequenz von etwa 0,2 Hz oder größer aufweist. Bei zusammengesetzten Ausdrücken, die die Auslegung des Turms betreffen, wie beispielsweise soft-stiff (analog auch soft-soft und dergleichen), bezeichnet der erste Ausdruck (hier: soft) die Auslegung des Turms für die dreifache Rotorumdrehung und der zweite Ausdruck (hier: stift) die Auslegung des Turms für die einfache Rotorumdrehung.

Derartige Betontürme haben sich bis zu einem Windenergieanlagen-Leistungsbereich bis zu etwa 5 Megawatt (MW) bewährt. Anlagen, die über eine höhere Leistung verfügen, etwa bis 10 MW oder mehr, und daher typischerweise eine größere Gesamthöhe aufweisen, würden insbesondere aufgrund der Steifigkeitsanforderungen, die zur Erreichung einer soft-stiff-spezifischen Eigenfrequenz nötig sind, mit einem derart hohen Materialbedarf einhergehen und eine derart große Gesamtmasse aufweisen, dass Betontürme hierzu nicht wirtschaftlich eingesetzt werden könnten. Beispielsweise würde ein soft-stiff-ausgelegter Turm, der eine Höhe von 200 m aufweisen soll, eine Gesamtmasse von bis zu 5000 t aufweisen, was weder technisch noch wirtschaftlich erwünscht und umsetzbar ist.

Vor diesem Hintergrund liegt der Erfindung die Aufgabe zugrunde, einen Turm für eine Windenergieanlage der eingangs bezeichneten Art dahingehend weiterzubilden, dass die im Stand der Technik aufgefundenen Nachteile möglichst weitgehend behoben werden. Insbesondere war ein Betonturm für eine Windenergieanlage anzugeben, der größere Bauhöhen bei einer geringeren Gesamtmasse erlaubt und damit die Errichtung von Windenergieanlagen größerer Leistung wirtschaftlich ermöglicht.

Erfindungsgemäß wird die Aufgabe bei einem Turm der eingangs genannten Art dadurch gelöst, dass eine Biegesteifigkeit des Turms in dem unteren Abschnitt größer ist als eine Biegesteifigkeit des Turms in dem oberen Abschnitt. Insbesondere nimmt die Biegesteifigkeit in dem oberen Abschnitt über einen Höhenverlauf ausgehend von dem oberen Abschlussabschnitt bis zur Bezugshöhe um weniger als 10%, insbesondere weniger als 5%, ab. Die Erfindung wird dadurch weitergebildet, dass die Biegesteifigkeit in dem unteren Abschnitt über einen Höhenverlauf des unteren Abschnitts variiert. Insbesondere nimmt die Biegesteifigkeit in dem unteren Abschnitt über einen Höhenverlauf ausgehend von der Bezugshöhe bis zum unteren Abschlussabschnitt um weniger als 20%, insbesondere weniger als 15%, ab.

Im Vergleich zu aus dem Stand der Technik vorbekannten Türmen wird durch die nahezu konstante Biegesteifigkeit in dem oberen Abschnitt und die in Richtung des Fundaments des Turms wesentlich weniger stark zunehmende Biegesteifigkeit in dem unteren Abschnitt eine besonders geeignete Ausbildung der Eigenfrequenz des Turmes, insbesondere in einem Bereich von 0,19 Hz oder kleiner, vorzugsweise im Bereich 0,09 Hz, erreicht. Durch diese soft-soft-Auslegung bzw. soft-Resonanz-Auslegung lässt sich die Gesamtmasse des Turms im Vergleich zu aus dem Stand der Technik vorbekannten Lösungen und Auslegungskonzepten reduzieren.

Gemäß eines zweiten Aspekts der Erfindung bzw. gemäß einer vorteilhaften Weiterbildung der Erfindung gemäß des ersten Aspekts wird erfindungsgemäß vorgeschlagen, dass eine Gesamtmasse des unteren Abschnitts im Wesentlichen gleich ist zur Gesamtmasse des oberen Abschnitts. Der Ausdruck "im Wesentlichen gleich" ist vorliegend so zu verstehen, dass die Gesamtmasse des unteren Abschnitts um nicht mehr als 10 % (oder bis 30 %) von der Masse des oberen Abschnitts abweicht. Die Erfindung macht sich die Erkenntnis zunutze, dass im Vergleich zu bereits aus dem Stand der Technik vorbekannten Turmauslegungskonzepten eine kopflastige Massenverteilung angestrebt wird. Dies wird insbesondere dadurch erreicht, dass der untere Abschnitt in etwa die gleiche Masse aufweist, wie der obere Abschnitt, wobei die Gesamtlängen der Abschnitte vorzugsweise im Wesentlichen gleich sind.

Der erfindungsgemäße Turm ist dabei nach Art einer sogenannten soft-soft-Auslegung dimensioniert, wonach der Turm eine geringere Eigenfrequenz aufweist, als die aus dem Stand der Technik vorbekannten soft-stiff-Konstruktionen. Durch die Auslegung des Turms als soft-soft-Turm kann dessen Gesamtmasse im Vergleich zu aus dem Stand der Technik vorbekannten Betontürmen reduziert werden, sodass bei gleicher Gesamtturmmasse insgesamt höhere Türme errichtet werden können. Ein erfindungsgemäßer Turm der Gesamthöhe von z.B. 200 m weist beispielsweise eine Gesamtmasse von etwa 3000 t auf, wohingegen ein aus dem Stand der Technik bekannter soft-stiff-ausgelegter Turm eine Masse von etwa 5000 t aufweisen würde. Darüber hinaus ist der erfindungsgemäße Turm aufgrund seiner Auslegung und Massenverteilung auch für weichere Böden geeignet. Im Vergleich zu aus dem Stand der Technik vorbekannten Türmen lässt sich damit die Einsetzbarkeit des Turmes in Bezug auf Bodenbeschaffenheitsanforderungen erweitern. Der Turm ist insbesondere für eine Kopflast von 500 t bis 700 t, besonders bevorzugt 600 t, ausgelegt.

Vorzugsweise entspricht die Bezugshöhe einer Höhe von 45 % bis 55 % einer Gesamthöhe des Turms ausgehend von dem unteren Abschlussabschnitt entspricht, insbesondere 50 %. Gemäß einer bevorzugten Weiterbildung weisen die Wandelemente des unteren Abschnitts eine geringere Wandstärke auf als die Wandelemente des oberen Abschnitts. Die gewünschte Massenverteilung im Hinblick auf den unteren Abschnitt und den oberen Abschnitt lässt sich hierdurch wie gewünscht beeinflussen. Vorzugsweise weist wenigstens eines, insbesondere mehrere der Wandelemente des unteren Abschnitts eine konische Außengeometrie auf. Insoweit wird erfindungsgemäß vorgeschlagen, dass sich der Turm bereichsweise ausgehend von dem unteren Abschlusselement in dem unteren Abschnitt in Richtung der Bezugshöhe zumindest abschnittsweise verjüngt. Die Erfindung wird dadurch weitergebildet, dass wenigstens eines, mehrere oder alle der Wandelemente des oberen Abschnitts eine zylindrische Außengeometrie aufweisen. Im Übrigen macht sich der Turm gemäß dem zweiten Aspekt die gleichen Vorteile und bevorzugten Ausführungsformen zunutze wie der erfindungsgemäße Turm gemäß dem ersten Aspekt und umgekehrt. Diesbezüglich wird auf die obigen Ausführungen verwiesen und deren Inhalt hier miteinbezogen.

Gemäß eines dritten Aspektes der Erfindung bzw. gemäß einer vorteilhaften Weiterbildung der Erfindung gemäß des ersten oder zweiten Aspektes wird erfindungsgemäß vorgeschlagen, dass wenigstens eines, mehrere oder alle Wandelemente des unteren Abschnitts einen ersten Betonwerkstoff aufweisen und ein, mehrere oder alle Wandelemente des oberen Abschnitts einen zweiten Betonwerkstoff aufweisen, wobei sich der erste Betonwerkstoff von dem zweiten Betonwerkstoff hinsichtlich wenigstens einer Materialeigenschaft unterscheidet. Der erste Betonwerkstoff ist vorzugsweise als hochfester Betonwerkstoff ausgebildet, wobei dieser insbesondere die Druckfestigkeitsklasse C100/115 aufweist.

Die Erfindung wird dadurch weitergebildet, dass der zweite Betonwerkstoff eine geringere Festigkeit und/oder Materialgüte aufweist als der erste Betonwerkstoff. Gemäß einer bevorzugten Ausführungsform weist der zweite Betonwerkstoff insbesondere die Druckfestigkeitsklasse C50/60 auf.

Durch die Verwendung der unterschiedlichen Betonwerkstoffe kann sowohl die Massenverteilung als auch die Steifigkeit für die beiden Abschnitte vorteilhaft beeinflusst werden. Dadurch, dass für den oberen Abschnitt kein hochfester Beton erforderlich ist, sondern lediglich Beton geringerer Festigkeit und/oder Materialgüter, lässt sich darüber hinaus eine Kosteneinsparung reduzieren. Vorzugsweise besteht der Turm zu > 90 % der Gesamtmasse aus einem Betonwerkstoff. Lediglich für den unteren Abschnitt hat sich die Verwendung von hochfestem Beton als vorzugswürdig zur Erreichung der gewünschten Gesamtturmfestigkeit erwiesen. Im Übrigen macht sich der Turm gemäß dem dritten Aspekt die gleichen Vorteile und bevorzugten Ausführungsformen zunutze wie der erfindungsgemäße Turm gemäß dem ersten und zweiten Aspekt und umgekehrt. Diesbezüglich wird auf die obigen Ausführungen verwiesen und deren Inhalt hier miteinbezogen.

Gemäß eines vierten Aspekts bzw. einer weiteren bevorzugten Ausführungsform ist erfindungsgemäß eine Spanneinrichtung mit wenigstens einem Spannmittel vorgesehen, wobei die Spanneinrichtung zum Verspannen der Wandelemente ausgebildet ist, wobei mehrere oder alle Wandelemente des oberen Abschnitts jeweils eine Führungsaufnehmung aufweisen, wobei das Spannmittel in dem oberen Abschnitt in den Führungsaufnehmungen beweglich geführt ist, und wobei das Spannmittel in dem unteren Abschnitt beabstandet zu den Wandelementen innerhalb des Turmes geführt ist.

Insbesondere ist das Spannmittel in dem oberen Abschnitt vollständig innerhalb der Wandelemente mittels der Führungsausnehmung oder der Führungsausnehmungen geführt.

Die Spanneinrichtung ist zum Verspannen der Wandelemente und damit des Turms insgesamt nach Art eines Spannbetonturms eingerichtet. Aufgrund der Auslegung des Turms, insbesondere als soft-soft-Turm oder soft-Resonanz-Turm ist dieser vergleichsweise starken Verformungen ausgesetzt. Das größte Maß an Verformung ist hierbei in dem oberen Abschnitt zu erwarten. Durch die Führung des Spannmittels der Spanneinrichtung innerhalb der in den Wandelementen angeordneten Führungsausnehmungen wird eine verbesserte Führung und Krafteinleitung in die Spannmittel erreicht.

Gemäß einer bevorzugten Ausführungsform weist der Turm ein Fundament auf, welches an den unteren Abschlussabschnitt angrenzt, und wobei das Spannmittel mit dem Fundament verspannt ist, insbesondere mittels eines in das Fundament einbetonierten Festankers. Vorzugsweise weist die Spanneinrichtung mehrere Spannmittel auf, die entlang des Umfang des Turmes verteilt, insbesondere gleichmäßig beabstandet, angeordnet sind. Vorzugsweise ist das Spannmittel mit dem oberen Abschlussabschnitt verspannt. Auf diese Weise wird eine Verspannung des Turms, insbesondere des oberen Abschlussabschnitts des Turms, gegenüber dem Fundament erreicht. Die Verwendung eines Spannkellers ist nicht erforderlich.

Gemäß einer bevorzugten Ausführungsform ist im Turminneren ein Umlenkadapter zur Umlenkung des Spannmittels angeordnet. Vorzugsweise verläuft das Spannmittel im Bereich des oberen Abschnitts im Wesentlichen vertikal und im Bereich des unteren Abschnitts ausgehend von dem Fundament in Richtung der Bezugshöhe nach oben und nach radial innen. Hierdurch wird eine Hebelwirkung generiert und damit die Verspannung der Wandelemente insgesamt optimiert. Im Übrigen macht sich der Turm gemäß dem vierten Aspekt die gleichen Vorteile und bevorzugten Ausführungsformen zunutze wie der erfindungsgemäße Turm gemäß dem ersten, zweiten und dritten Aspekt und umgekehrt. Diesbezüglich wird auf die obigen Ausführungen verwiesen und deren Inhalt hier miteinbezogen.

Gemäß eines fünften Aspekts bzw. einer weiteren bevorzugten Ausführungsform ist erfindungsgemäß ferner vorgesehen, dass der Turm wenigstens ein Tragwerksystem aufweist, welches innerhalb des Turmes angeordnet ist, und wobei das Tragwerksystem mechanisch von den Wandelementen entkoppelt ist. Mit anderen Worten wird vorgeschlagen, dass das Tragwerksystem im Inneren des Turmes und so beabstandet zu den Wandelementen angeordnet ist, dass es von diesen entkoppelt ist. Das erfindungsgemäße Tragwerksystem ist besonders deshalb vorteilhaft, da die Auslegung des Turms insgesamt zu vergleichsweise starken Verformungen desselben führt. Insoweit ist vorgesehen, dass das Tragwerksystem insbesondere von Kräften, die durch eine Turmverformung entstehen, entkoppelt ist. Vorzugsweise ist das Tragewerksystem dabei möglichst schlank ausgestaltet.

Insbesondere ist das Tragwerkssystem oberseitig an dem Turm mittels einer Tragwerksystemaufhängung befestigt und von dieser abgehängt. Das Tragwerkssystem ist vorzugsweise nach Art einer "Turm-in-Turm"-Anordnung ausgebildet. Das Tragwerksystem ist vorzugsweise gegenüber dem Turm gegen Verschieben gesichert, nicht jedoch seitlich an diesem befestigt. Vorzugsweise werden zur Montage des Tragwerksystems Segmente des Tragwerksystems auf einer Bodenplattform bereitgestellt und das Tragwerksystem sodann von oben nach unten im Turminneren aufgebaut. Derweil kann darüber der Turm errichtet werden. Durch diesen abgehängten Aufbau wird der Vorteil erzielt, dass eine bei klassischen Stahlrohrtürmen vorhandene Beulenproblematik vermieden wird. Ferner wird der Aufbauprozess entkoppelt. Vorzugsweise ist das Tragwerkssystem dazu eingerichtet, einen Aufzug und/oder Kabel und Leitungen aufzunehmen.

Gemäß einer bevorzugten Ausführungsform weist das Tragwerksystem wenigstens einen Zugstab auf, welcher an wenigstens einem Wandelement befestigt ist, und wobei der Zugstab dazu eingerichtet ist, das Tragwerksystem mechanisch von dem Wandelement zu entkoppeln. Die Verwendung eines Zugstabs hat sich als besonders geeignet zur mechanischen Entkopplung des Tragwerksystems von dem oder den Wandelementen erwiesen. Gemäß einer bevorzugten Ausführungsform weist das Tragwerksystem wenigstens zwei benachbarte Zugstäbe auf, wobei die benachbarten Zugstäbe zueinander einen Abstand von 20 m bis 30 m, insbesondere 24 m bis 26 m, aufweisen.

Die Erfindung wird dadurch weitergebildet, dass der Turm eine neutrale Faser aufweist, und wobei das Tragwerksystem koaxial oder benachbart zur neutralen Faser angeordnet ist. Hierdurch wird eine mechanische Entkopplung des Tragwerksystems von durch die Turmverformung auftreten Kräften und Momenten gefördert. Vorzugsweise ist das Tragwerksystem dazu eingerichtet, wenigstens eines der folgenden Elemente aufzunehmen und/oder diese auszubilden: Leiterweg, Kabelweg, Plattform, Beleuchtungseinrichtung, Lift. Der Turm gemäß des fünften Aspekts macht die gleichen Vorteile und bevorzugten Ausführungsformen zunutze wie der Turm gemäß den vorstehenden Aspekten der Erfindung. Diesbezüglich wird auf die obigen Ausführungen verwiesen und deren Inhalt hier miteinbezogen.

Gemäß einer bevorzugten Ausführungsform weist der Turm eine Gesamthöhe von 100m bis 220 m, insbesondere 120 m bis 205 m auf, besonders bevorzugt 200 m. Gemäß einer weiteren bevorzugten Ausführungsform weist der untere Abschnitt eine erste Höhe auf und der untere Abschnitt eine zweite Höhe, wobei die erste Höhe im Wesentlichen gleich groß ist wie die zweite Höhe.

Vorzugsweise entspricht die Bezugshöhe einer Blattspitzendurchgangshöhe eines Rotorblatts der Windenergieanlage. Gemäß einer bevorzugten Ausführungsform weisen die Wandelemente eine Höhe von 2 m bis 4 m auf, insbesondere 3 m. Hierbei wird abgestellt auf eine Höhe der Wandelemente in einem montierten Zustand, in welchem die Wandelemente den Turm ausbilden, wobei die Höhe in Vertikalrichtung heranzuziehen ist. Die Erfindung wird dadurch weitergebildet, dass wenigstens eines, mehrere oder sämtliche der Wandelemente aus zwei, drei oder mehr Halbschalen ausgebildet sind. Vorzugsweise weisen aus zwei Halbschalen ausgebildete Wandelemente einen Durchmesser von bis zu 6 m auf. Vorzugsweise weisen aus drei Halbschalen ausgebildete Wandelemente einen Durchmesser größer als 6 m auf.

Vorzugsweise verjüngt sich ein Außendurchmesser der Wandelemente in dem unteren Abschnitt ausgehend von dem unteren Abschlussabschnitt bis zur Bezugshöhe. Die Verjüngung des Außendurchmessers kann dabei sowohl linear erfolgen als auch nichtlinear, insbesondere stufenweise oder auch mittels konisch verlaufender Wandelemente. Gemäß einer bevorzugten Ausführungsform beträgt der Außendurchmesser der Wandelemente im Bereich des unteren Abschlussabschnitts 8 m bis 9 m, insbesondere 8,5 m, wobei sich der Außendurchmesser bis zum Erreichen der Bezugshöhe auf 4 m bis 5 m, insbesondere 4,5 m verjüngt.

Vorzugsweise weisen die Wandelemente in dem oberen Abschnitt einen im Wesentlichen konstanten Außendurchmesser auf. Im Wesentlichen konstant ist hierin so zu verstehen, dass hiervon ein mathematisch exakt konstanter Außendurchmesser erfasst ist und Abweichungen um bis zu 5% hiervon. Vorzugsweise weisen die Wandelemente in dem oberen Abschnitt einen konstanten Außendurchmesser von 4 m bis 5 m, insbesondere 4,5 m auf.

Gemäß einer bevorzugten Ausführungsform sind die Wandelemente miteinander mittels einer vertikalen Fixierung verbunden. Dies hat sich als besonders vorzugswürdig zur Aufnahme von Biegemomenten, welche auf den Turm wirken, erwiesen.

Vorzugsweise weist der Turm in Bezug auf seine Eigenfrequenz eine soft-soft-Auslegung oder eine soft-Resonanz-Auslegung auf. Gemäß einer bevorzugten Ausführungsform weist der Turm eine Eigenfrequenz von 0,19 Hz oder weniger auf. Gemäß einer bevorzugten Ausführungsform weist der Turm in Bezug auf seine Eigenfrequenz eine soft-soft-Auslegung auf, wobei der Turm eine Eigenfrequenz von 0,1 Hz oder weniger aufweist, insbesondere eine Eigenfrequenz von 0,09 Hz oder weniger. Gemäß einer alternativ bevorzugten Ausführungsform weist der Turm in Bezug auf seine Eigenfrequenz eine soft-Resonanz-Auslegung auf, wobei der Turm eine Eigenfrequenz von größer als 0,09 Hz und 0,19 Hz oder weniger aufweist.

Gemäß einer bevorzugten Ausführungsform ist an dem oberen Abschlussabschnitt des Turms ein Stahlturmsegment angeordnet, welches dazu eingerichtet ist, eine Plattform aufzunehmen. Gemäß einer alternativ bevorzugten Ausführungsform ist ein Stahlturmsegment an beliebiger Position im Bereich des Turmes vorgesehen. Gemäß einer bevorzugten Ausführungsform weist der Turm in dem oberen Abschnitt wenigstens ein Wandelement auf, welches einen hochfesten Betonwerkstoff aufweist, insbesondere einen Betonwerkstoff der Druckfestigkeitsklasse C100/115.

Die Erfindung ist vorstehend unter Bezugnahme auf einen Turm für eine Windenergieanlage beschrieben worden. In einem weiteren Aspekt betrifft die Erfindung eine Windenergieanlage mit einem Turm, insbesondere mit einem Turm nach einem der vorstehenden Ausführungsbeispiele, einem Fundament und einem Rotor, wobei der Turm eine Mehrzahl von übereinander angeordneten Wandelementen aufweist, wobei zumindest einige, insbesondere sämtliche der Wandelemente Beton aufweisen oder daraus ausgebildet sind, wobei der Turm eine Eigenfrequenz aufweist, und wobei der Rotor in einem Beriebsdrehzahlbereich zwischen einer unteren Rotordrehzahl und einer oberen Rotordrehzahl betrieben wird und der Rotor in Abhängigkeit von der Rotordrehzahl eine einfache Blattanregungsfrequenz aufweist, wobei die Eigenfrequenz des Turms in einem Bereich unterhalb der Blattanregungsfrequenz für die obere Rotordrehzahl liegt oder der der Blattanregungsfrequenz für die obere Rotordrehzahl entspricht.

Eine derartige Ausbildung der Turm-Eigenfrequenz wird als weiche Auslegung oder softsofte-Auslegung des Turms bezeichnet. Vorzugsweise ist der Turm als Betonturm, insbesondere als Spannbetonturm ausgebildet.

Die Windenergieanlage macht sich die gleichen Vorteile und bevorzugten Ausführungsformen zunutze wie der erfindungsgemäße Turm und umgekehrt. Diesbezüglich wird auf die obigen Ausführungen verwiesen und deren Inhalt hier mit einbezogen.

Die Erfindung wird nachfolgend anhand eines bevorzugten Ausführungsbeispiels unter Bezugnahme auf die beigefügten Figuren näher beschrieben.

Hierbei zeigen:
- Fig. 1 ein Ausführungsbeispiel einer Windenergieanlage mit einem erfindungsgemäßen Turm in einer schematischen Schnittdarstellung;
- Fig. 2a bis 2c Detaildarstellungen einiger Baugruppen des Turmes gemäß Fig. 1 in schematischen Ansichten;
- Fig. 3 eine weitere schematische Ansicht eines erfindungsgemäßen Turmes in einer Schnittansicht;
- Fig. 4a und 4b erfindungsgemäße Wandelemente in perspektivischen Darstellungen;
- Fig. 5a und 6a Diagramme betreffen Massen- und Steifigkeitsverteilungen eines erfindungsgemäßen Turms in einer soft-soft-Auslegung;
- Fig. 5b und 6b Diagramme betreffend Massen- und Steifigkeitsverteilungen eines erfindungsgemäßen Turms in einer soft-Resonanz-Auslegung;
- Fig. 7 ein Campbell-Diagramm einer erfindungsgemäßen Windenergieanlage; und
- Fig. 8 eine schematische Darstellung eines erfindungsgemäßen Tragwerksystems für einen erfindungsgemäßen Turm in einer schematischen Ansicht;
- Fig. 9 eine erfindungsgemäße vertikale Fixierung für Wandelemente eines erfindungsgemäßen Turms;
- Fig. 10 eine alternative Darstellung eines erfindungsgemäßen Tragwerksystems.

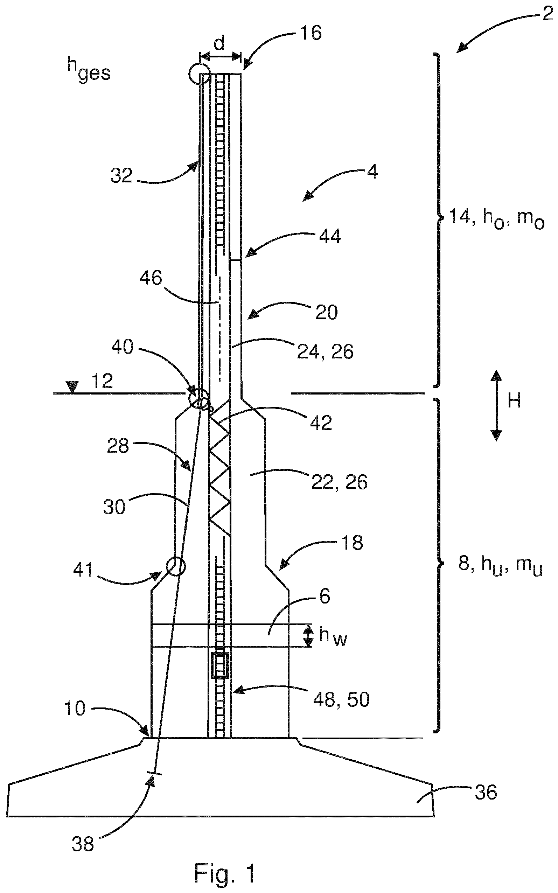

Fig. 1 zeigt eine Windenergieanlage 2, welche hier lediglich schematisch angedeutet ist. Die Windenergieanlage 2 weist einen Turm 4 auf. Der Turm 4 weist eine Mehrzahl von übereinander angeordneten Wandelementen 6 auf. Zumindest einige, insbesondere sämtliche der Wandelemente 6 weisen Beton auf oder sind daraus ausgebildet. Der Turm 4 weist einen unteren Abschnitt 8 auf. Der untere Abschnitt 8 erstreckt sich ausgehend von einem unteren Abschlussabschnitt 10 bis zu einer Bezugshöhe 12. Der Turm 4 weist ferner einen oberen Abschnitt 14 auf, welcher sich ausgehend von der Bezugshöhe 12 bis zu einem oberen Abschlussabschnitt 16 erstreckt. Die Bezugshöhe 12 teilt den in Fig. 1 dargestellten Turm 4 derart, dass eine Länge hₒ des oberen Abschnitts 14 einer Länge hᵤ des unteren Abschnitts 8 entspricht. Der Turm weist eine Gesamthöhe h_{ges} auf. Die Gesamthöhe h_{ges} liegt insbesondere im Bereich von 100 m bis 220 m, wobei der in Fig. 1 dargestellte Turm eine Gesamthöhe h_{ges} von 200 m aufweist.

Die Bezugshöhe 12 entspricht insbesondere einer Blattspitzendurchgangshöhe 12 eines Rotorblatts der Windenergieanlage 2, hier nicht dargestellt. Die Wandelemente 6 weisen eine Höhe hw von insbesondere 3 m auf. Die Wandelemente 6 weisen einen Außendurchmesser d auf. Der Außendurchmesser d ist im Bereich des oberen Abschnitts 14 im Wesentlichen konstant. Der Außendurchmesser d der Wandelemente 6 in dem unteren Abschnitt 8 verjüngt sich von dem unteren Abschlussabschnitt 10 hin zur Bezugshöhe 12. Die Verjüngung kann linear erfolgen oder, wie in Fig. 1 gezeigt, abschnittsweise.

Insbesondere wird vorgeschlagen, dass der Turm 4 in dem unteren Abschnitt 8 aus zumindest abschnittsweise konischen Wandelementen 6 ausgebildet ist, die eine schrittweise Verjüngung des Turms 4 in diesem Abschnitt mit zunehmender Höhe bewirken. Der Außendurchmesser d der Wandelemente 6 beträgt im Bereich des unteren Abschlussabschnitts 10 beispielsweise 8 m bis 9 m, insbesondere 8,5 m. Der Außendurchmesser d verjüngt sich bis zum Erreichen der Bezugshöhe 12 auf etwa 4 m bis 5 m, insbesondere 4,5 m. Die Wandelemente 6 des oberen Abschnitts 14 weisen einen im Wesentlichen konstanten Außendurchmesser d auf, welcher beispielsweise im Bereich von 4 m bis 5 m, insbesondere 4,5 m liegt.

Der Turm weist ferner ein Tragwerksystem 42 auf. Das Tragwerksystem 42 ist innerhalb des Turmes 4 angeordnet. Das Tragwerksystem 42 ist mechanisch von den Wandelementen 6 entkoppelt. Das Tragwerksystem 42 weist hierzu einen Zugstab 44 auf, welcher an wenigstens einem Wandelement 6 befestigt ist. Der Zugstab 44 ist dazu eingerichtet, das Tragwerksystem 42 mechanisch von dem entsprechenden Wandelement 6, mit welchem es verbunden ist, zu entkoppeln. Insbesondere weist das Tragwerksystem 42 wenigstens zwei beabstandete Zugstäbe 44 auf. Die benachbarten Zugstäbe 44 weisen zueinander einen Abstand von insbesondere 20 m bis 30 m auf.

Der Turm 4 weist ferner eine neutrale Faser 46 auf. Die neutrale Faser 46 erstreckt sich im Wesentlichen entlang einer vertikal verlaufenden Längsachse des Turmes 4. Das Tragwerksystem 42 ist koaxial zur neutralen Faser 46 angeordnet. Das Tragwerksystem 42 ist dazu eingerichtet, einen Leiterweg 48 und ein Kabelweg 50 aufzunehmen. Darüber hinaus kann das Tragwerksystem 42 dazu eingerichtet sein, eine Plattform, eine Beleuchtungseinrichtung oder einen Lift aufzunehmen.

Der Turm 4 weist ferner eine Spanneinrichtung 28 auf. Die Spanneinrichtung weist wenigstens ein Spannmittel 30, insbesondere mehrere Spannmittel 30, auf. Die Spanneinrichtung 28 mit den Spannmitteln 30 ist zum Verspannen der Wandelemente 6 ausgebildet. Insoweit unterstützt die Spanneinrichtung 28 dabei, den Turm 4 als Spannbetonturm auszubilden. Mehrere oder alle der Wandelemente 6 des oberen Abschnitts 14 weisen jeweils eine Führungsausnehmung 32 auf. Das Spannmittel 30 ist in dem oberen Abschnitt 14 in den Führungsausnehmungen 32 beweglich geführt. Das Spannmittel 30 ist in dem unteren Abschnitt 8 beabstandet zu den Wandelementen 6 innerhalb des Turms 4 geführt. Zwischen dem oberen Abschnitt 14 und dem unteren Abschnitt 8 tritt das Spannmittel 30 in einem Austrittsbereich 40 aus den Führungsausnehmungen 32 aus.

Der Turm 4 weist ein Fundament 36 auf. Das Fundament 36 grenzt an den unteren Abschlussabschnitt 10 an. Das Spannmittel 30 ist mit dem Fundament 36 verspannt, insbesondere mittels eines in das Fundament 36 einbetonierten Festankers 38. Das Spannmittel 30 ist ferner mit dem oberen Abschlussabschnitt 16 verspannt. Innerhalb des Turms 4 ist ferner ein Umlenkadapter 41 vorgesehen. Der Umlenkadapter 41 ist dazu eingerichtet, das Spannmittel 30 umzulenken. Das Spannmittel 30 verläuft im Bereich des oberen Abschnitts 14 im Wesentlichen vertikal, wobei hier auf den Turm im errichteten Zustand abgestellt wird, und im Bereich des unteren Abschnitts 8 ausgehend von dem Fundament 36 in Richtung der Bezugshöhe 12 nach oben und nach radial innen. Auf diese Weise macht sich das Spannmittel 30 eine Hebelwirkung, die sich aus der betreffenden Anordnung und Führung ergibt, zunutze.

Der untere Abschnitt 8 weist eine Gesamtmasse mᵤ auf. Der obere Abschnitt 14 weist eine Gesamtmasse mₒ auf. Die Masse mᵤ entspricht im Wesentlichen der Masse mₒ. Die Wandelemente 6 des unteren Abschnitts 8 weisen einen ersten Betonwerkstoff 22 auf. Die Wandelemente 6 des oberen Abschnitts 14 weisen einen zweiten Betonwerkstoff 24 auf. Der erste Betonwerkstoff 22 unterscheidet sich von dem zweiten Betonwerkstoff 24 hinsichtlich wenigstens einer Materialeigenschaft 26. Vorzugsweise ist der erste Betonwerkstoff 22 ein hochfester Betonwerkstoff. Der zweite Betonwerkstoff 24 ist vorzugsweise kein hochfester Betonwerkstoff. Insoweit weist typischerweise der zweite Betonwerkstoff 24 eine geringe Festigkeit und/oder Materialgüte auf als der erste Betonwerkstoff 22.

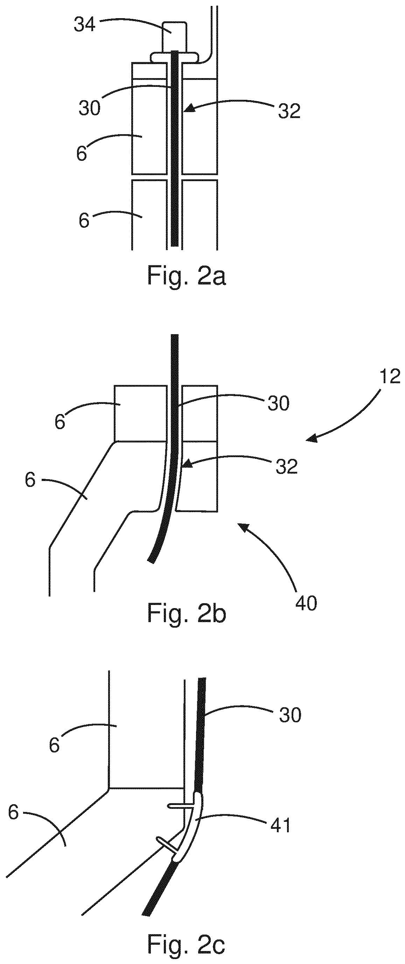

Die Fig. 2a bis 2c zeigen Detaildarstellungen der in Fig. 1 durch Kreise hervorgehobenen Bereiche des Turms 4. Fig. 2a zeigt die Verspannung des Spannmittels 30 und dessen Führung durch die Führungsausnehmungen 32 der Wandelemente 6. Das Spannmittel 30 ist in einem oberen Bereich des Turms mittels eines Fixiermittels 34 verspannt. Fig. 2b zeigt die Führung des Spannmittels 30 im Bereich der Bezugshöhe 12. In dem oberen dargestellten Wandelement 6 ist das Spannmittel 30 in der Führungsausnehmung 32 geführt. In dem unteren Wandelement 6 findet eine solche Führung im oberen Bereich des Wandelements 6 ebenfalls statt, wobei das Spannmittel 30 im unteren Bereich nunmehr die Führungsausnehmung 32 verlässt und in Richtung des Fundaments 36 des Turms 4 innerhalb des Turms 4 geführt wird. Fig. 2c zeigt einen Umlenkadapter 41 zur Umlenkung des Spannmittels 30. Der Umlenkadapter 41 ist innerhalb des Turmes 4 angeordnet. Insoweit verläuft das Spannmittel 30 im Bereich des oberen Abschnitts 14 im Wesentlichen vertikal und im Bereich des unteren Abschnitts 8 ausgehend von dem Fundament 36 in Richtung der Bezugshöhe 12 nach oben und nach radial innen.

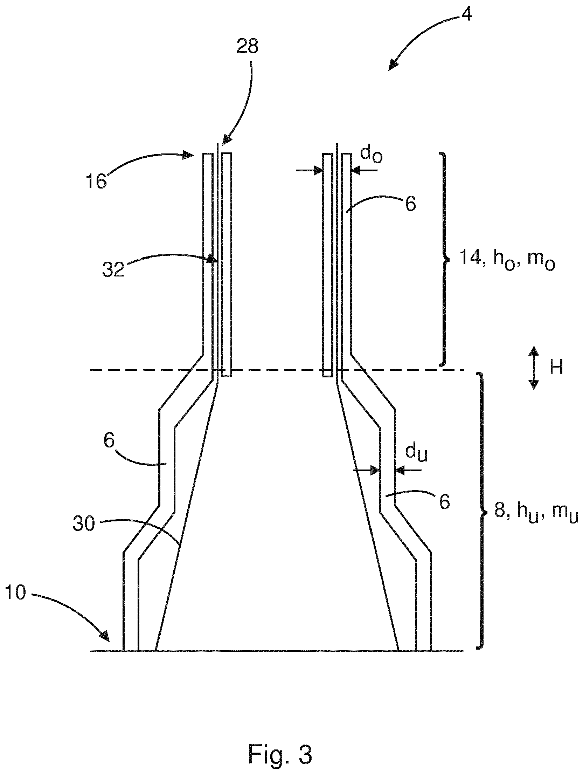

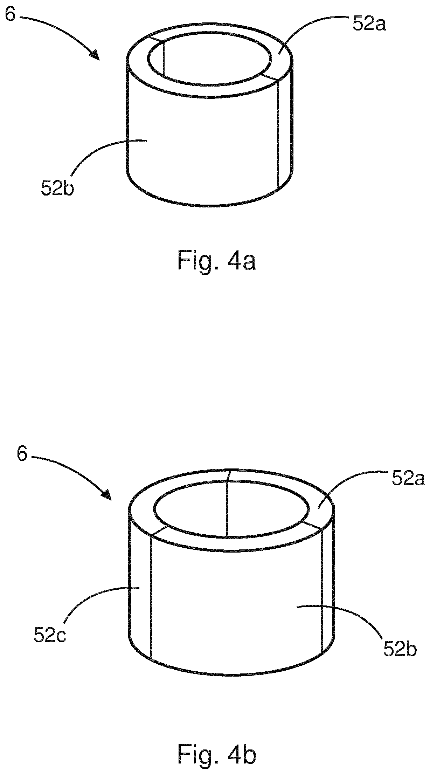

Fig. 3 zeigt eine alternative Darstellung eines erfindungsgemäßen Turms 4, der sich an die Darstellung in Fig. 1 anlehnt. Wie Fig. 3 zu entnehmen ist, weisen die Wandelemente 6 in dem oberen Abschnitt 14 eine Wandstärke dₒ auf. Die Wandelemente 6 in dem unteren Abschnitt 8 weisen eine Wandstärke dᵤ auf. Darüber hinaus ist in Fig. 4 der Höhenverlauf H mittels einer schematischen Pfeildarstellung eingetragen.

Die Fig. 4a und 4b zeigen exemplarische Wandelemente 6. In Fig. 4a wird das Wandelement 6 durch die Halbschalen 52a und 52b ausgebildet. Eine solche zweiteilige Ausbildung der Wandelemente 6 ist insbesondere bei kleineren Außendurchmessern d vorteilhaft. Bei dem in Fig. 4b gezeigten Wandelement 6 weist das Wandelement 6 insgesamt drei Halbschalen 52a, 52b, 52c auf. Eine solche dreiteilige Ausbildung des Wandelements 6 ist insbesondere für größere Durchmesser d geeignet.

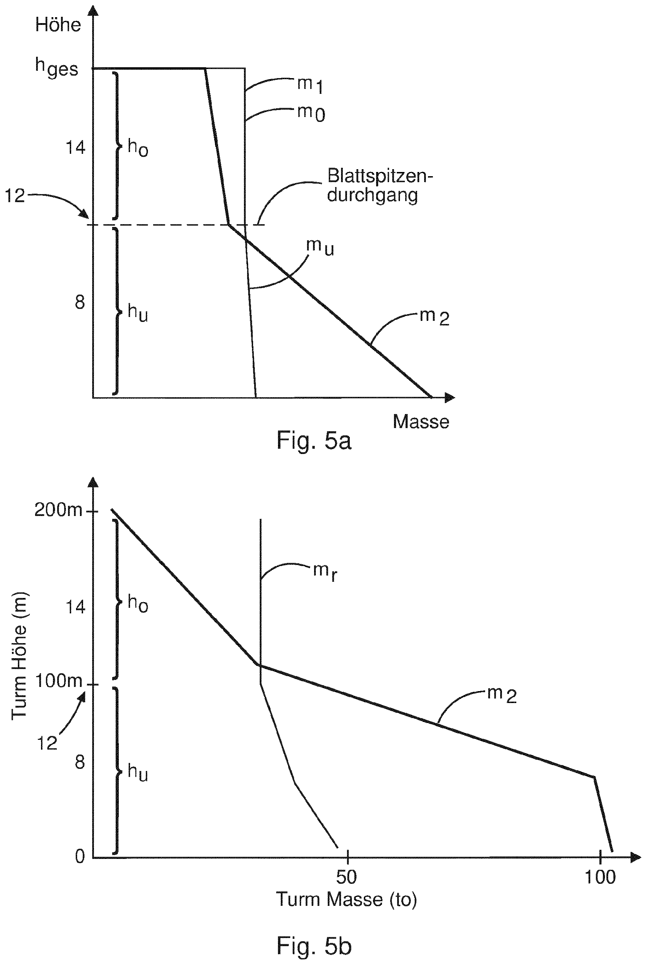

Fig. 5a zeigt zwei Diagramme, wobei in einem ersten Diagramm eine Massenverteilung m₁ für einen erfindungsgemäßen Turm 4 in einer soft-soft-Auslegung gezeigt ist. In einem zweiten Diagramm ist eine Massenverteilung m₂ eines Turms aus dem Stand der Technik gezeigt, der eine soft-stiff-Auslegung aufweist. In den Diagrammen ist jeweils die Masse über die Höhe eines Turms aufgetragen, der eine Gesamthöhe h_{ges} aufweist, die sich in eine Höhe hₒ des oberen Abschnitts 14 und eine Höhe hᵤ des unteren Abschnitts 8 aufteilt. Wie der Darstellung zu entnehmen ist, weist der erfindungsgemäße Turm eine Massenverteilung m₁ auf, die weitestgehend über die Turmhöhe konstant ist. Insbesondere weisen der obere Abschnitt 14 und der untere Abschnitt 8 im Wesentlichen die gleiche Masse auf. Bei aus dem Stand der Technik vorbekannten Türmen, deren Masseverteilung hier mit m₂ dargestellt ist, konzentriert sich ein wesentlicher Teil der Masse auf den unteren Abschnitt 8 und nimmt mit zunehmender Höhe ab.

Fig. 5b zeigt zwei Diagramme, wobei in einem ersten Diagramm eine Massenverteilung mᵣ für einen erfindungsgemäßen Turm 4 in einer soft-Resonanz-Auslegung gezeigt ist. In einem zweiten Diagramm ist eine Massenverteilung m₂ eines Turms aus dem Stand der Technik gezeigt, der eine soft-stiff-Auslegung aufweist. In den Diagrammen ist jeweils die Masse über die Höhe eines Turms aufgetragen, der eine Gesamthöhe h_{ges} von 200 m aufweist, die sich in eine Höhe hₒ des oberen Abschnitts 14 und eine Höhe hᵤ des unteren Abschnitts 8 aufteilt. Die Massenverteilung mᵣ des erfindungsgemäßen soft-Resonanz Turms 4 ist im oberen Abschnitt 14 weitestgehend konstant über die Höhe und nimmt im unteren Abschnitt 8 mit abnehmender Höhe zu.

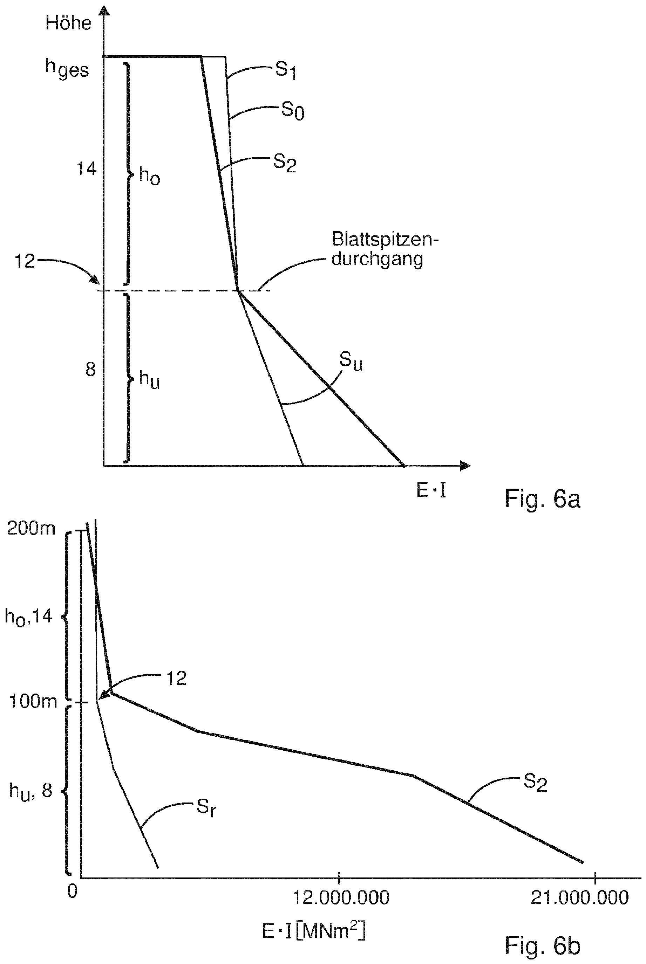

Fig. 6a zeigt eine Biegesteifigkeitsverteilung S₁ eines erfindungsgemäßen Turms 4 in einer soft-soft-Auslegung, die einer Biegesteifigkeitsverteilung S₂ eines Turms aus dem Stand der Technik (soft-stiff-Auslegung) gegenübergestellt ist. Insgesamt weist der erfindungsgemäße Turm 4 eine konstantere Biegesteifigkeitsverteilung S₁ auf, als der aus dem Stand der Technik vorbekannte Turm S₂. In dem oberen Abschnitt 14 ist die Biegesteifigkeit Sₒ beim erfindungsgemäßen Turm 4 weitestgehend konstant bzw. nimmt lediglich leicht zu, betrachtet von der Turmspitze nach unten. Die Biegesteifigkeit Sₒ ist insgesamt größer als bei bekannten Türmen mit einer Biegesteifigkeitsverteilung S₂. Ab Erreichen der Bezugshöhe 12 nimmt die Biegesteifigkeit Sᵤ des unteren Abschnitts 8 beim erfindungsgemäßen Turm 4 zwar bezogen auf ein Höhenintervall in höherem Maße zu, die Zunahme und auch der Gesamtwert der Biegesteifigkeit Sᵤ des unteren Abschnitts 8 liegen jedoch unter denen von aus dem Stand der Technik vorbekannten Türmen, hier mit S₂ dargestellt.

Fig. 6b zeigt eine Biegesteifigkeitsverteilung Sᵣ eines erfindungsgemäßen Turms 4 in einer soft-Resonanz-Auslegung, die einer Biegesteifigkeitsverteilung S₂ eines Turms aus dem Stand der Technik (soft-stiff-Auslegung) gegenübergestellt ist. Insgesamt weist der erfindungsgemäße soft-Resonanz ausgelegte Turm 4 eine konstantere Biegesteifigkeitsverteilung Sᵣ auf, als der aus dem Stand der Technik vorbekannte Turm S₂. In dem oberen Abschnitt 14 ist die Biegesteifigkeit Sᵣ beim erfindungsgemäßen Turm 4 weitestgehend konstant. Die Biegesteifigkeit Sᵣ ist nur in den oberen 10 % bis 15 % der Gesamthöhe h_{ges} größer als bei bekannten soft-stiff ausgelegten Türmen mit einer Biegesteifigkeitsverteilung S₂ und ist ansonsten geringer. Ab Erreichen der Bezugshöhe 12 nimmt die Biegesteifigkeit Sᵣ des unteren Abschnitts 8 beim erfindungsgemäßen Turm 4 zwar mit abnehmender Höhe zu, die Zunahme und auch der Gesamtwert der Biegesteifigkeit Sᵣ des unteren Abschnitts 8 liegen jedoch deutlich unter denen von aus dem Stand der Technik vorbekannten Türmen, hier mit S₂ dargestellt. Bei dem beispielhaft dargestellten erfindungsgemäßen Turm 4 beträgt die Biegesteifigkeit Sᵣ in Bodennähe beispielsweise maximal etwa 5.000.000 MNm², bei einem aus dem Stand der Technik bekannten soft-stiff-ausgelegten Turm mit der Biegesteifigkeitsverteilung S₂ in Bodennähe bis zu etwa 20.000.000 MNm².

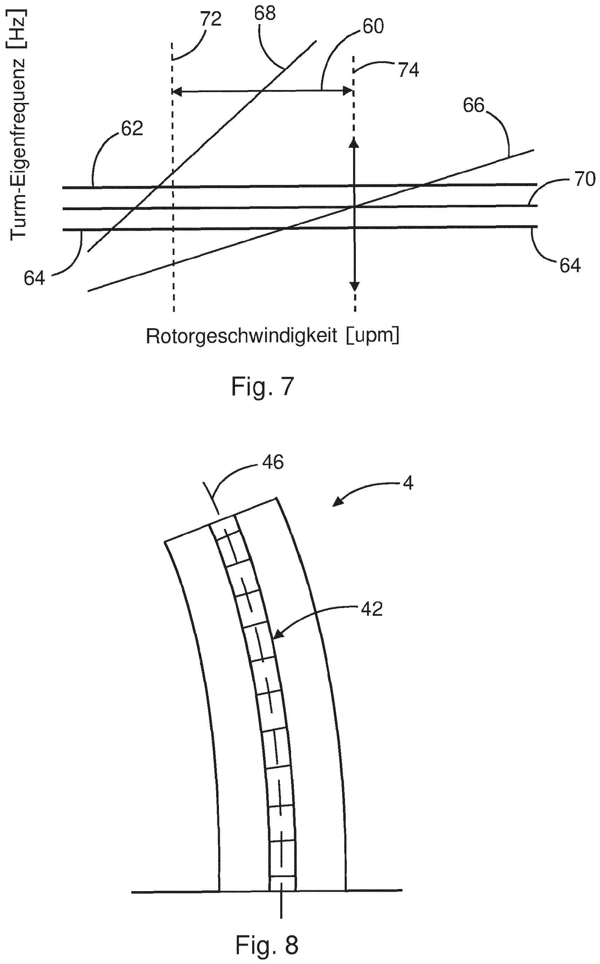

Fig. 7 zeigt ein sogenanntes Campbell-Diagramm, bei dem eine Turm-Eigenfrequenz über eine Rotor-Umdrehungszahl einer Windenergieanlage aufgetragen ist. Für einen erfindungsgemäßen Turm ist die Eigenfrequenz E in Form einer Linie 64 eingetragen. Die Eigenfrequenz E entspricht einer soft-soft-Auslegung des Turms. Ferner ist in das Diagramm exemplarisch eine weitere Turm-Eigenfrequenz 62 eingezeichnet, die einer soft-stiff-Auslegung des Turms entspricht. Eigenfrequenzen oberhalb einer soft/stiff-Übergangslinie 70 sind dabei dem soft-stiff-Bereich zuzuordnen und Eigenfrequenzen unterhalb der soft/stiff-Übergangslinie 70 dem soft-soft-Bereich.

Der Rotor der Windenergieanlage wird in einem Beriebsdrehzahlbereich 60 zwischen einer unteren Rotordrehzahl 72 und einer oberen Rotordrehzahl 74 betrieben. Der Rotor weist in Abhängigkeit von der Rotordrehzahl eine einfache Blattanregungsfrequenz 66 auf, die als Gerade dargestellt ist. Der Schnittpunkt der Geraden der Blattanregungsfrequenz 66 mit der oberen Rotordrehzahl 74 bestimmt die horizontale Lage der soft/stiff-Übergangslinie 70. Ein ebenfalls eingezeichneter Rotorgeschwindigkeitsverlauf 68 entspricht der dreifachen Anregung, die auch als Blattdurchgangsanregung bezeichnet wird.

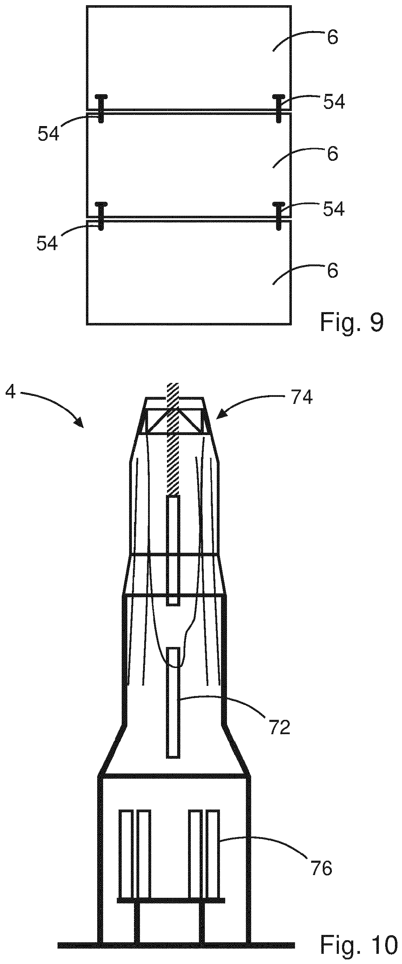

Fig. 8 zeigt schematisch den erfindungsgemäßen Turm 4. Der Turm 4 weist eine neutrale Faser 46 auf. Das Tragwerksystem 42 ist, wie bereits ausgeführt, im Bereich der neutralen Faser 46 angeordnet, insbesondere koaxial zu dieser. Fig. 9 zeigt schematisch eine Auswahl an Wandelementen 6. Die Wandelemente 6 sind mittels vertikaler Fixierungen 54 verbunden.

Fig. 10 zeigt ein alternatives Ausführungsbeispiel eines erfindungsgemäßen Turms 4, der ein Tragwerksystem 72 nach Art einer "Turm-in-Turm"-Anordnung aufweist. Das Tragwerksystem 72 ist gegenüber dem Turm gegen Verschieben gesichert, nicht jedoch seitlich an diesem befestigt. Zur Montage des Tragwerksystems 72 werden Segmente des Tragwerksystems 72 auf einer Bodenplattform bereitgestellt und das Tragwerksystem sodann von oben nach unten aufgebaut. Das Tragwerksystems 72 ist über eine Tragwerksystemaufhängung 74, welche in einem oberen Turmbereich angeordnet ist, mit dem Turm 4 verbunden und von der Tragwerksystemaufhängung 74 abgehängt.

### Bezugszeichenliste

- 2: Windenergieanlage
- 4: Turm
- 6: Wandelement
- 8: unterer Abschnitt
- 10: unterer Abschlussabschnitt
- 12: Bezugshöhe / Blattspitzendurchgangshöhe
- 14: oberer Abschnitt
- 16: oberer Abschlussabschnitt
- 18: konische Außengeometrie
- 20: zylindrische Außengeometrie
- 22: erster Betonwerkstoff
- 24: zweiter Betonwerkstoff
- 26: Materialeigenschaft
- 28: Spanneinrichtung
- 30: Spannmittel
- 32: Führungsausnehmung
- 34: Fixiermittel
- 36: Fundament
- 38: Festanker
- 40: Austrittsbereich
- 41: Umlenkadapter
- 42: Tragwerkssystem
- 44: Zugstab
- 46: neutrale Faser
- 48: Leiterweg
- 50: Kabelweg
- 52a: Halbschale
- 52b: Halbschale
- 52c: Halbschale
- 54: vertikale Fixierung
- 58: Stahlturmsegment
- 60: Betriebsdrehzahlbereich
- 62: Turm-Eigenfrequenz soft-stiff
- 64: Turm-Eigenfrequenz soft-soft
- 66: einfache Blattanregungsfrequenz
- 68: zweiter Rotorgeschwindigkeitsverlauf
- 70: soft/stiff-Übergangslinie
- 72: Turm-in-Turm Tragwerksystem
- 74: Tragwerksystemaufhängung
- 76: Bodenplattform
- d: Außendurchmesser
- dᵤ: Wandstärke Wandelemente unterer Abschnitt
- dₒ: Wandstärke Wandelemente oberer Abschnitt
- H: Höhenverlauf
- E: Eigenfrequenz
- h_{ges}: Gesamthöhe
- hₒ: Höhe des oberen Abschnitts
- hᵤ: Höhe des unteren Abschnitts
- hw: Höhe der Wandelemente
- m₁: Massenverteilung eines erfindungsgemäßen Turms (soft-soft)
- m₂: Massenverteilung eines Turms aus dem Stand der Technik (soft-stift)
- mₒ: Gesamtmasse des oberen Abschnitts
- mₒ: Gesamtmasse des unteren Abschnitts
- mᵣ: Massenverteilung eines erfindungsgemäßen Turms (soft-Resonanz)
- S₁: Biegesteifigkeitsverteilung eines erfindungsgemäßen Turms (soft-soft)
- S₂: Biegesteifigkeitsverteilung eines Turms aus dem Stand der Technik (soft-stift)
- Sᵤ: Biegesteifigkeit des unteren Abschnitts
- Sₒ: Biegesteifigkeit des oberen Abschnitts
- Sᵣ: Biegesteifigkeitsverteilung eines erfindungsgemäßen Turms (soft-soft)

### Die Erfindung wird ferner beschrieben anhand der nachfolgenden Ausführungsformen:

1. Ausführungsform: Turm (4) für eine Windenergieanlage (2) mit einer Mehrzahl von übereinander angeordneten Wandelementen (6), wobei zumindest einige, insbesondere sämtliche der Wandelemente (6) Beton aufweisen oder daraus ausgebildet sind,
   wobei der Turm (4) einen unteren Abschnitt (8) aufweist, welcher sich ausgehend von einem unteren Abschlussabschnitt (10) bis zu einer Bezugshöhe (12) erstreckt,
   und einen oberen Abschnitt (14), welcher sich ausgehend von der Bezugshöhe (12) bis zu einem oberen Abschlussabschnitt (16) erstreckt,
   wobei die Bezugshöhe (12) einer Höhe von 35 % bis 65 % einer Gesamthöhe des Turms ausgehend von dem unteren Abschlussabschnitt entspricht, insbesondere einer Blattspitzendurchgangshöhe (12) eines Rotorblatts der Windenergieanlage (2),
   wobei eine Gesamtmasse (mᵤ) des unteren Abschnitts (8) im Wesentlichen gleich ist zur Gesamtmasse (mₒ) des oberen Abschnitts (14).
2. Ausführungsform: Turm (4) nach Ausführungsform 1,
   wobei die Bezugshöhe (12) einer Höhe von 45 % bis 55 % einer Gesamthöhe des Turms ausgehend von dem unteren Abschlussabschnitt entspricht, insbesondere 50 %.
3. Ausführungsform: Turm (4) nach Ausführungsform 1,
   wobei die Wandelemente (6) des unteren Abschnitts (8) eine geringere Wandstärke (dᵤ) aufweisen als die Wandelemente (6) des oberen Abschnitts (dₒ).
4. Ausführungsform: Turm (4) nach einer der vorstehenden Ausführungsformen,
   wobei wenigstens eines, insbesondere mehrere der Wandelemente (6) des unteren Abschnitts (8) eine konische Außengeometrie (18) aufweisen und/oder
   wobei wenigstens eines, insbesondere mehrere der Wandelemente (6) des oberen Abschnitts (14) eine zylindrische Außengeometrie (20) aufweisen.
5. Ausführungsform: Turm (4) nach dem Oberbegriff der Ausführungsform 1 oder nach einer der vorstehenden Ausführungsformen,
   wobei eine Biegesteifigkeit (Sᵤ) des Turms (4) in dem unteren Abschnitt (8) größer ist als eine Biegesteifigkeit (Sₒ) des Turms (4) in dem oberen Abschnitt (14).
6. Ausführungsform: Turm (4) nach Ausführungsform 5,
   wobei die Biegesteifigkeit (Sₒ) in dem oberen Abschnitt (14) über einen Höhenverlauf (H) ausgehend von dem oberen Abschlussabschnitt (10) bis zur Bezugshöhe (12) um weniger als 10%, insbesondere weniger als 5 %, abnimmt.
7. Ausführungsform: Turm (4) nach Ausführungsform 5 oder 6,
   wobei die Biegesteifigkeit (Sᵤ) in dem unteren Abschnitt (8) über einen Höhenverlauf (H) des unteren Abschnitts (8) variiert.
8. Ausführungsform: Turm (4) nach Ausführungsform 7,
   wobei die Biegesteifigkeit (Sₒ) in dem unteren Abschnitt (14) über einen Höhenverlauf (H) ausgehend von der Bezugshöhe (12) bis zum unteren Abschlussabschnitt (10) um weniger als 20%, insbesondere weniger als 15 %, abnimmt.
9. Ausführungsform: Turm (4) nach dem Oberbegriff der Ausführungsform 1 oder nach einer der vorstehenden Ausführungsformen,
   wobei wenigstens eins, mehrere oder alle Wandelemente (6) des unteren Abschnitts (8) einen ersten Betonwerkstoff (22) aufweisen und eins, mehrere oder alle Wandelemente (6) des oberen Abschnitts (14) einen zweiten Betonwerkstoff (24) aufweisen, wobei sich der erste Betonwerkstoff (22) von dem zweiten Betonwerkstoff (24) hinsichtlich wenigstens einer Materialeigenschaft (26) unterscheidet.
10. Ausführungsform: Turm (4) nach Ausführungsform 9,
   wobei der erste Betonwerkstoff (22) ein hochfester Betonwerkstoff ist, insbesondere ein Betonwerkstoff (22) der Druckfestigkeitsklasse C100/115.
11. Ausführungsform: Turm (4) nach Ausführungsform 10,
   wobei der zweite Betonwerkstoff (24) eine geringere Festigkeit und/oder Materialgüte aufweist als der erste Betonwerkstoff (22).
12. Ausführungsform: Turm (4) nach einer der Ausführungsformen 9 bis 11,
   wobei der zweite Betonwerkstoff (24) ein Betonwerkstoff (22) der Druckfestigkeitsklasse C50/60 ist.
13. Ausführungsform: Turm (4) nach dem Oberbegriff der Ausführungsform 1 oder nach einer der vorstehenden Ausführungsformen,
   wobei eine Spanneinrichtung (28) mit wenigstens einem Spannmittel (30), wobei die Spanneinrichtung (28) zum Verspannen der Wandelemente (6) ausgebildet ist,
   wobei mehrere oder alle Wandelemente (6) des oberen Abschnitts (14) jeweils eine Führungsausnehmung (32) aufweisen, wobei das Spannmittel (30) in dem oberen Abschnitt (14) in den Führungsausnehmungen (32) beweglich geführt ist,
   und wobei das Spannmittel (30) in dem unteren Abschnitt (8) beabstandet zu den Wandelementen (6) innerhalb des Turmes (4) geführt ist.
14. Ausführungsform: Turm (4) nach Ausführungsform 13,
   wobei der Turm (4) ferner ein Fundament (36) aufweist, welches an den unteren Abschlussabschnitt (10) angrenzt, und wobei das Spannmittel (30) mit dem Fundament (36) verspannt ist, insbesondere mittels eines in das Fundament (36) einbetonierten Festankers (38).
15. Ausführungsform: Turm (4) nach einer der Ausführungsformen 13 oder 14,
   wobei das Spannmittel (30) ferner mit dem oberen Abschlussabschnitt (16) verspannt ist.
16. Ausführungsform: Turm (4) nach einer der Ausführungsformen 13 bis 15,
   wobei innerhalb des Turms (4) ein Umlenkadapter (41) zur Umlenkung des Spannmittels (30) angeordnet ist, und/oder wobei das Spannmittel (30) im Bereich des oberen Abschnitts (14) im Wesentlichen vertikal verläuft und im Bereich des unteren Abschnitts (8) ausgehend von dem Fundament (36) in Richtung der Bezugshöhe (12) nach oben und nach radial innen verläuft.
17. Ausführungsform: Turm (4) nach dem Oberbegriff der Ausführungsform 1 oder nach einer der vorstehenden Ausführungsformen,
   wobei der Turm (4) wenigstens ein Tragwerkssystem (42) aufweist, welches innerhalb des Turms (4) angeordnet ist, und wobei das Tragwerkssystem (42) mechanisch von den Wandelementen (6) entkoppelt ist.
18. Ausführungsform: Turm (4) nach Ausführungsform 17,
   wobei das Tragwerksystems (42) wenigstens einen Zugstab (44) aufweist, welcher an wenigstens einem Wandelement (6) befestigt ist, und wobei der Zugstab (44) dazu eingerichtet ist, das Tragwerkssystem (42) mechanisch von dem Wandelement (6) zu entkoppeln.
19. Ausführungsform: Turm (4) nach Ausführungsform 18,
   wobei das Tragwerksystem (42) wenigstens zwei benachbarte Zugstäbe (44) aufweist, und
   wobei die benachbarten Zugstäbe (44) zueinander einen Abstand von 20 m bis 30 m, insbesondere 24 m bis 26 m, aufweisen.
20. Ausführungsform: Turm (4) nach einer der Ausführungsformen 17 bis 19,
   wobei der Turm (4) eine neutrale Faser (46) aufweist und wobei das Tragwerkssystem (42) koaxial oder benachbart zur neutralen Faser (46) angeordnet ist.
21. Ausführungsform: Turm (4) nach einer der Ausführungsformen 17 bis 20,
   wobei das Tragwerkssystem (42) dazu eingerichtet ist, wenigstens eines der folgenden Elemente aufzunehmen und/oder auszubilden:
   - Leiterweg (48),
   - Kabelweg (50),
   - Plattform,
   - Beleuchtungseinrichtung,
   - Lift.
22. Ausführungsform: Turm (4) nach einer der vorstehenden Ausführungsformen,
   wobei der Turm eine Gesamthöhe (h_{ges}) von 100 m bis 220 m, insbesondere 120 m bis 210 m, aufweist.
23. Ausführungsform: Turm (4) nach Ausführungsform 22,
   wobei der Turm eine Gesamthöhe (h_{ges}) von 200 m aufweist.
24. Ausführungsform: Turm (4) nach einer der vorstehenden Ausführungsformen,
   wobei der untere Abschnitt (8) eine erste Höhe (hᵤ) aufweist und wobei der obere Abschnitt (14) eine zweite Höhe (hₒ) aufweist, wobei die erste Höhe (hᵤ) im Wesentlichen gleich groß ist wie die zweite Höhe (hₒ).
25. Ausführungsform: Turm (4) nach einer der vorstehenden Ausführungsformen,
   wobei die Wandelemente (6) eine Höhe (hw) von 2 m bis 4 m aufweisen, insbesondere 3 m.
26. Ausführungsform: Turm (4) nach einer der vorstehenden Ausführungsformen,
   wobei wenigstens eines oder mehrere der Wandelemente (6) aus zwei, drei oder mehr Halbschalen (52a, 52b, 52c) ausgebildet ist.
27. Ausführungsform: Turm (4) nach einer der vorstehenden Ausführungsformen,
   wobei sich ein Außendurchmesser der Wandelemente in dem unteren Abschnitt ausgehend von dem unteren Abschlussabschnitt bis zur Bezugshöhe verjüngt.
28. Ausführungsform: Turm (4) nach Ausführungsform 27,
   wobei ein Außendurchmesser (d) der Wandelemente (6) im Bereich des unteren Abschlussabschnitts (10) 8 m bis 9 m beträgt, insbesondere 8,5 m, und wobei sich der Außendurchmesser (d) bis zum Erreichen der Bezugshöhe (12) auf 4 m bis 5 m, insbesondere 4,5 m, verjüngt.
29. Ausführungsform: Turm (4) nach einer der vorstehenden Ausführungsformen,
   wobei die Wandelemente (6) in dem oberen Abschnitt (14) einen im Wesentlichen konstanten Außendurchmesser (d) aufweisen.
30. Ausführungsform: Turm (4) nach Ausführungsform 29,
   wobei die Wandelemente (6) in dem oberen Abschnitt (14) einen konstanten Außendurchmesser (d) von 4 m bis 5 m, insbesondere 4,5 m, aufweisen.
31. Ausführungsform: Turm (4) nach einer der vorstehenden Ausführungsformen,
   wobei die Wandelemente (6) miteinander mittels einer vertikalen Fixierung (54) verbunden sind.
32. Ausführungsform: Turm (4) nach einer der vorstehenden Ausführungsformen, wobei der Turm (4) in Bezug auf seine Eigenfrequenz (56) eine soft-soft-Auslegung oder eine soft-Resonanz-Auslegung aufweist.
33. Ausführungsform: Turm (4) nach Ausführungsform 32,
   wobei der Turm (4) eine Eigenfrequenz (E) von 0,19 Hz oder weniger aufweist.
34. Ausführungsform: Turm (4) nach einer der Ausführungsformen 32 oder 33,
   wobei der Turm (4) in Bezug auf seine Eigenfrequenz (E) eine soft-soft-Auslegung aufweist, wobei der Turm (4) eine Eigenfrequenz (E) von 0,1 Hz oder weniger aufweist, insbesondere eine Eigenfrequenz (E) von 0,09 Hz.
35. Ausführungsform: Turm (4) nach einer der Ausführungsformen 32 oder 33,
   wobei der Turm (4) in Bezug auf seine Eigenfrequenz (E) eine soft-Resonanz-Auslegung aufweist, wobei der Turm (4) eine Eigenfrequenz (E) von größer als 0,09 Hz aufweist.
36. Ausführungsform: Turm (4) nach einer der vorstehenden Ausführungsformen,
   wobei an dem oberen Abschlussabschnitt (16) des Turms (4) ein Stahlturmsegment (58) angeordnet ist, welches dazu eingerichtet ist, eine Plattform aufzunehmen.
37. Ausführungsform: Windenergieanlage (2) mit einem Turm (4),
   wobei der Turm (4) nach einer der vorstehenden Ausführungsformen ausgebildet ist.

## Patentansprüche

1. Turm (4) für eine Windenergieanlage (2) mit einer Mehrzahl von übereinander angeordneten Wandelementen (6), wobei zumindest einige, insbesondere sämtliche der Wandelemente (6) Beton aufweisen oder daraus ausgebildet sind,
wobei der Turm (4) einen unteren Abschnitt (8) aufweist, welcher sich ausgehend von einem unteren Abschlussabschnitt (10) bis zu einer Bezugshöhe (12) erstreckt,
und einen oberen Abschnitt (14), welcher sich ausgehend von der Bezugshöhe (12) bis zu einem oberen Abschlussabschnitt (16) erstreckt,
wobei die Bezugshöhe (12) einer Höhe von 35 % bis 65 % einer Gesamthöhe des Turms ausgehend von dem unteren Abschlussabschnitt entspricht, insbesondere einer Blattspitzendurchgangshöhe (12) eines Rotorblatts der Windenergieanlage (2),
**dadurch gekennzeichnet, dass** eine Biegesteifigkeit (Sᵤ) des Turms (4) in dem unteren Abschnitt (8) größer ist als eine Biegesteifigkeit (Sₒ) des Turms (4) in dem oberen Abschnitt (14),
wobei die Biegesteifigkeit (Sₒ) in dem oberen Abschnitt (14) über einen Höhenverlauf (H) ausgehend von dem oberen Abschlussabschnitt (10) bis zur Bezugshöhe (12) um weniger als 10%, insbesondere weniger als 5 %, abnimmt und
wobei die Biegesteifigkeit (Sₒ) in dem unteren Abschnitt (14) über einen Höhenverlauf (H) ausgehend von der Bezugshöhe (12) bis zum unteren Abschlussabschnitt (10) um weniger als 20%, insbesondere weniger als 15 %, abnimmt.

2. Turm (4) nach Anspruch 1, wobei der Turm (4) in Bezug auf seine Eigenfrequenz (56) eine soft-soft-Auslegung oder eine soft-Resonanz-Auslegung aufweist.

3. Turm (4) nach Anspruch 2,
wobei der Turm (4) eine Eigenfrequenz (E) von 0,19 Hz oder weniger aufweist.

4. Turm (4) nach einem der Ansprüche 2 oder 3,
wobei der Turm (4) in Bezug auf seine Eigenfrequenz (E) eine soft-soft-Auslegung aufweist, wobei der Turm (4) eine Eigenfrequenz (E) von 0,1 Hz oder weniger aufweist, insbesondere eine Eigenfrequenz (E) von 0,09 Hz.

5. Turm (4) nach einem der Ansprüche 2 oder 3,
wobei der Turm (4) in Bezug auf seine Eigenfrequenz (E) eine soft-Resonanz-Auslegung aufweist, wobei der Turm (4) eine Eigenfrequenz (E) von größer als 0,09 Hz aufweist.

6. Turm (4) nach dem Oberbegriff des Anspruchs 1 oder nach einem der vorstehenden Ansprüche,
wobei eine Gesamtmasse (mᵤ) des unteren Abschnitts (8) im Wesentlichen gleich ist zur Gesamtmasse (mₒ) des oberen Abschnitts (14).

7. Turm (4) nach einem der vorstehenden Ansprüche,
wobei die Bezugshöhe (12) einer Höhe von 45 % bis 55 % einer Gesamthöhe des Turms ausgehend von dem unteren Abschlussabschnitt entspricht, insbesondere 50 %.

8. Turm (4) nach dem Oberbegriff des Anspruchs 1 oder nach einem der vorstehenden Ansprüche,
wobei wenigstens eins, mehrere oder alle Wandelemente (6) des unteren Abschnitts (8) einen ersten Betonwerkstoff (22) aufweisen und eins, mehrere oder alle Wandelemente (6) des oberen Abschnitts (14) einen zweiten Betonwerkstoff (24) aufweisen, wobei sich der erste Betonwerkstoff (22) von dem zweiten Betonwerkstoff (24) hinsichtlich wenigstens einer Materialeigenschaft (26) unterscheidet.

9. Turm (4) nach Anspruch 8,
wobei der erste Betonwerkstoff (22) ein hochfester Betonwerkstoff ist, insbesondere ein Betonwerkstoff (22) der Druckfestigkeitsklasse C100/115, und/oder
wobei der zweite Betonwerkstoff (24) eine geringere Festigkeit und/oder Materialgüte aufweist als der erste Betonwerkstoff (22).

10. Turm (4) nach einem der Ansprüche 8 oder 9,
wobei der zweite Betonwerkstoff (24) ein Betonwerkstoff (22) der Druckfestigkeitsklasse C50/60 ist.

11. Turm (4) nach dem Oberbegriff des Anspruchs 1 oder nach einem der vorstehenden Ansprüche,
**gekennzeichnet durch** eine Spanneinrichtung (28) mit wenigstens einem Spannmittel (30), wobei die Spanneinrichtung (28) zum Verspannen der Wandelemente (6) ausgebildet ist, wobei mehrere oder alle Wandelemente (6) des oberen Abschnitts (14) jeweils eine Führungsausnehmung (32) aufweisen, welche insbesondere in den Wandelementen (6) angeordnet ist, wobei das Spannmittel (30) in dem oberen Abschnitt (14) in den Führungsausnehmungen (32) beweglich geführt ist,
und wobei das Spannmittel (30) in dem unteren Abschnitt (8) beabstandet zu den Wandelementen (6) innerhalb des Turmes (4) geführt ist,
insbesondere wobei der Turm (4) ferner ein Fundament (36) aufweist, welches an den unteren Abschlussabschnitt (10) angrenzt, und wobei das Spannmittel (30) mit dem Fundament (36) verspannt ist, insbesondere mittels eines in das Fundament (36) einbetonierten Festankers (38).

12. Turm (4) nach Anspruch 11,
wobei innerhalb des Turms (4) ein Umlenkadapter (41) zur Umlenkung des Spannmittels (30) angeordnet ist, und/oder wobei das Spannmittel (30) im Bereich des oberen Abschnitts (14) im Wesentlichen vertikal verläuft und im Bereich des unteren Abschnitts (8) ausgehend von dem Fundament (36) in Richtung der Bezugshöhe (12) nach oben und nach radial innen verläuft.

13. Turm (4) nach dem Oberbegriff des Anspruchs 1 oder nach einem der vorstehenden Ansprüche,
wobei der Turm (4) wenigstens ein Tragwerkssystem (42) aufweist, welches innerhalb des Turms (4) angeordnet ist, und wobei das Tragwerkssystem (42) mechanisch von den Wandelementen (6) entkoppelt ist, insbesondere derart, dass das Tragwerkssystem (42) oberseitig an dem Turm (4) mittels einer Tragwerksystemaufhängung (74) befestigt und von dieser abgehängt ist.

14. Turm (4) nach einem der vorstehenden Ansprüche,
wobei der Turm eine Gesamthöhe (h_{ges}) von 100 m bis 220 m, insbesondere 120 m bis 210 m, aufweist, insbesondere wobei der Turm eine Gesamthöhe (h_{ges}) von 200 m aufweist.

15. Windenergieanlage (2) mit einem Turm (4), insbesondere mit einem Turm (4) nach einem der vorstehenden Ansprüche, einem Fundament und einem Rotor,
wobei der Turm eine Mehrzahl von übereinander angeordneten Wandelementen (6) aufweist, wobei zumindest einige, insbesondere sämtliche der Wandelemente (6) Beton aufweisen oder daraus ausgebildet sind,
wobei der Turm eine Eigenfrequenz (56) aufweist,
und wobei der Rotor in einem Beriebsdrehzahlbereich (68) zwischen einer unteren Rotordrehzahl (72) und einer oberen Rotordrehzahl (74) betrieben wird und der Rotor in Abhängigkeit von der Rotordrehzahl eine einfache Blattanregungsfrequenz (66) aufweist, wobei die Eigenfrequenz (56) des Turms in einem Bereich unterhalb der Blattanregungsfrequenz (66) für die obere Rotordrehzahl (74) liegt oder der Blattanregungsfrequenz (66) für die obere Rotordrehzahl (74) entspricht.
